# EUROPEAN PATENT SPECIFICATION

(11) **EP 0 879 803 B1**
(45) Date of publication and mention of the grant of the patent: **11.09.2002**
(21) Application number: 98304071.8
(22) Date of filing: 21.05.1998
(51) Int. Cl.: C08J 3/24, C03C 25/32

(54) **Method for forming a coated fiber strand and a coated fiber strand package**
Verfahren zur Herstellung eines bechichteten Faserstranges und eines beschichteten Faserstrangkörpers
Méthode de production d'un toron de fibres revêtues et d'un paquêt de torons de fibres revêtues

(30) Priority: 23.05.1997 US 864229
(43) Date of publication of application: 25.11.1998
(73) Proprietor: OWENS CORNING, Toledo, Ohio 43659 (US)
(72) Inventor: Hartman, David R., Granville, Ohio 43023 (US); Shipp, David L., Newark, Ohio 43055 (US); Woodside, Andrew B., Pickerington, Ohio 43147 (US); Muellerleile, Joan T., Bexley, Ohio 43209 (US)
(74) Representative: West, Alan Harry

(56) References cited:
- EP-A- 0 441 453
- EP-A- 0 805 127
- WO-A-96/05148
- US-A- 3 384 505
- US-A- 3 718 448
- US-A- 4 528 308
- US-A- 5 312 651
- DATABASE WPI Section Ch, Week 9704 Derwent Publications Ltd., London, GB; Class A32, AN 97-037421 XP002075584 & JP 08 294 974 A (SEKISUI CHEM IND CO LTD) , 12 November 1996
- DATABASE WPI Section Ch, Week 9646 Derwent Publications Ltd., London, GB; Class A32, AN 96-460205 XP002075585 & JP 08 230 060 A (SEKISUI CHEM IND CO LTD) , 10 September 1996

## Description

The present invention relates to a method for forming ceramic fiber strands suitable reinforcing composite products and more particularly to forming such fiber strands coated with a thermosetting treatment composition. It relates even more particularly to a method for forming a strand of glass or other ceramic fibers impregnated or preimpregnated with a treatment composition containing a curable thermoset resin which is uncured or only partially cured during the manufacture of the strand, but is fully curable during off-line processing of the impregnated or preimpregnated ("prepreg") strand into a composite article or product.

Fiber reinforced composite products or articles have been made using a variety of processes and materials. One common type of composite article includes a polymeric matrix reinforced with a plurality of ceramic reinforcing fibers (e.g., glass fibers). Glass and other ceramic reinforcing fibers are commonly manufactured by supplying the molten ceramic material to a bushing, drawing fibers from the bushing, applying a treatment composition such as an aqueous-based system, so as to size the drawn fibers, and then gathering the sized fibers into a tow or strand.

In fabricating a composite part, the fibers in each of a plurality of fiber strands are often further chemically treated in an off-line impregnation process with either a thermoset resin, one or two part, or a thermoplastic resin. For example, in one such process a bundle or strand of glass fibers is impregnated with a heat curable thermosetting resin and then pulled through a heated pultrusion die, simultaneously curing the resin and making a composite part such as, for example, a ladder rail. Composite products have also been fabricated in a filament winding process by feeding the fiber strands through a bath of a heat curable thermosetting resin, winding the impregnated strand around a mandrel and curing the thermoset resin to form a filament wound part such as a pipe.

Composite articles made with a thermosetting polymer matrix can exhibit superior mechanical properties compared to composite articles made with a thermoplastic polymer matrix. This is particularly true when the composite article is exposed to high temperatures.

However, once the thermosetting resin is cured, the impregnated strand cannot be molded or reshaped in subsequent processing. This characteristic of a thermoset impregnated fiber strand has caused such strands to be formed into the desired composite article soon after the strand is impregnated. Typically, when a thermoset resin is used, the composite article has had to be formed in-line with the process of impregnating the fiber strand. In contrast, the ability of thermoplastic polymers to be remelted enables thermoplastic impregnated strands to be subsequently heated and molded or otherwise shaped into various articles or products in off-line processes. Thus, thermoplastic impregnated strands are typically easier to work with and more versatile.

Accordingly, there is a need in the art for a fiber strand which exhibits the mechanical properties of a fiber strand coated with a thermosetting resin while also being easier to work with and more versatile than previous thermoset impregnated fiber strands. In particular, there is a need for a thermoset coated fiber strand which can be formed into a composite article in a subsequent off-line forming operation and then fully cured.

A number of prior documents describe the production of impregnated fibres suitable for making composite articles. For example, EP-A-0805127 (cited herein under Article 54(3) EPC), US-A-3,317,448 and WO-A-9605148 all describe the formation of pre-impregnated fibres but using aqueous-based treatment compositions. Although US-A-3,384,505 describes the resin coating of fibrous materials, it does so by application of resin composition to a wound package. Also, US-A-4,528,308 describes the application of resin coatings to filaments in winding and pultrusion but the coating is fully cured. JP-A-8294974 and JP-A-8230060 describe pultrusion processes but make no reference to the nature of the impregnation material.

In accordance with the present invention, there is now provided a method for forming a fiber strand suitable for making a composite article, the method comprising: coating a plurality of reinforcing fibers with a non-aqueous or substantially non-aqueous treatment composition which may contain not more than about 4.6% by weight water and comprising a curable thermosetting resin and a silane coupling agent; and heating the coated fibers thereby to partially cure the thermosetting resin.

The present invention meets the above need by providing as the product of the method a fiber strand coated with a thermoset treatment composition which undergoes little or no curing during in-line processing, but which can be completely cured or crosslinked during a subsequent off-line composite forming operation. The thermoset treatment composition includes a curable thermoset resin and a silane coupling agent and may or may not include a curing agent, a catalyst or an accelerant. The strand includes glass or other ceramic fibers which have been coated with the treatment composition containing the curable thermoset resin which is uncured or only partially cured during the manufacture of the strand but which may be fully cured during off-line processing of the coated strand into a composite article or product. It may be desirable for the treatment composition to be applied with sufficient amounts of the thermosetting resin to form all of the matrix of the final composite article. Alternatively, additional matrix resin material, which may be the same as or different than the type of resin material used in the treatment composition, can be added with the coated fiber strands, during the final composite product forming process to form the balance of the matrix.

The fiber strand product of the present method contains a plurality of fibers and a treatment composition which includes a curable thermosetting resin and a silane coupling agent with or without other constituents (e.g., a curing agent, catalyst, accelerant and citric acid.

The thermosetting resin is in a partially cured or uncured state. For the purposes of the present invention, a "curing agent" is defined as a chemical compound which increases the rate of cure of a resin and adds to the molecular weight or stoichiometry of the final cured resin. An "accelerant" is defined as a chemical compound which increases the rate of cure of a resin without adding to the molecular weight or stoichiometry of the final cured resin.

The treatment composition is non-aqueous or substantially non-aqueous, preferably with a concentration of about 98-100% by weight of the curable thermoset resin and silane coupling agent and, if present, other treatment constituents, with any remaining balance being water. The amount of water, if present, may be up to about 4.6% by weight.

In one embodiment, the treatment composition is coated on a plurality of fibers. It is desirable for the treatment composition to preimpregnate or impregnate the plurality of fibers. Preimpregnating or impregnating involves applying a sufficient amount of the treatment composition to a plurality of fibers such that the spaces between the fibers are substantially filled when the fibers are formed into a bundle or strand. Sizing, on the other hand, involves applying a relatively thin protective coating to the surface of each glass fiber. Glass reinforcing fibers are generally considered sized when they contain treatment constituents on the order of about 0.5% by weight, as determined by a conventional loss on ignition (LOI) test. A conventional loss on ignition (LOI) method can be used to determine the amount of the organic compounds loaded onto ceramic fibers (e.g., glass fibers). Coating includes sizing, preimpregnating, impregnating, or any other application of treatment composition on a plurality of fibers.

The treatment composition is non-aqueous or substantially non-aqueous and it may be desirable to use a heating step to drive off any water that may be present and to effect partial curing, and thereby thickening, of the treatment composition. This heat can be provided, for example, by bringing the coated fibers into contact with a heating device (e.g., a hot plate) which heats the coated fibers without effecting full curing of the resin.

The thermoset resin used to coat the fibers can be a heat curable type. For example, the curable thermoset resin can be a heat curable epoxy resin. An epoxy resin treatment composition may include a curing agent such as, for example, an amine or amide. If the treatment composition includes an amide curing agent, it may be desirable for a curing agent such as dicyandiamide or a polyamide to be used. An accelerant may also be included. Desirable accelerants may include 2-methyl imidazole and 2-ethyl-4-methyl imidazole. When the treatment composition includes a curing agent and/or an accelerant, the curing time of the thermosetting resin can be tailored such that little or no curing, or only partial curing takes place when the fibers are brought into contact with the heating device.

It is desirable for the treatment composition used to form coated fibers to comprise dicyandiamide, 2-methyl imidazole, and epoxy resin. This treatment composition will also comprise a silane coupling agent and, optionally, butoxy ethyl stearate.

When a curing agent is used in the treatment composition, it has been determined that a ratio of curable thermoset resin to curing agent of about 50:1 can be desirable. Also, when an accelerant is used, it has been found that a ratio of curable resin to accelerant of about 200:1 can be desirable. In addition, when both a curing agent and an accelerant are used, a ratio of curing agent to accelerant of about 4:1 can be desirable. It can be more desirable for such a treatment composition to contain about 2 parts of the curing agent, about 0.5 parts of the accelerant, and about 100 parts of the curable thermoset resin.

It is desirable for the fibers to be loaded with 8 to 35% by weight of the curable thermoset resin. It may be more desirable for the fibers to be loaded with about 30% by weight of the curable thermoset resin.

The Aborstrand may be wound into a package which is suitable for making a composite article. The package comprises a plurality of glass fibers coated with a thermosetting resin which is present in an uncured state or, preferably in a partially cured state.

The fiber strands produced by the method of the invention provide several advantages over other coated strands used to make composite products. The fiber strands can be coated with enough matrix resin that further resin application is unnecessary. Also, the resin coated fiber strands can be transported, shaped, and then fully cured just by heating. No additional chemicals need to be applied. In addition, depending on the concentrations of the treatment composition constituents (i.e., thermoset resin, curing agent, catalyst and accelerant), the fiber strand can be transported and stored for prolonged periods of time. For example, a fiber strand coated with an EPON® epoxy resin (available from Shell Chemical Company) containing 4 phr (parts per hundred resin) of the curing agent dicyandiamide can be stored for almost one year before fully curing.

The method of producing coated fiber strands of the present invention allows a non-aqueous or substantially non-aqueous treatment composition to be applied to the fibers during an in-line process and, if applicable, heated without effecting full curing of the thermosetting resin. The method provides several advantages over prior art methods including those methods which apply a size to the fibers during the glass forming process and then draw the fibers through an off-line resin bath prior to final processing into a composite product. With the present method all of the matrix of the final composite article may come from the applied treatment composition. Hence, off-line processes such as filament winding or pultrusion processes may be practiced without requiring the addition of further resin material and, as a result, such processes can be run at much faster speeds. Furthermore, open resin baths are not needed, which baths can emit into the working environment undesirable volatile organic compounds or VOC's. Alternatively, additional resin material, which may be the same as or different than the type of resin material used in the treatment composition may be added to the strand of coated fibers before or during the final composite product forming process to form the balance of the matrix. In the case of preimpregnated fibers, any additional resin can be added very quickly since the fibers of a formed strand are already impregnated. That is, the fibers are sufficiently wet that the resin has penetrated the fibers such that only the outer, exposed surface of the strand would need to be coated, if at all.

While the fibers referred to below with reference to the drawings are continuously formed glass fibers, other types of fibers are also suitable for use in the method including preformed fibers (fibers which were previously formed off-line), like synthetic fibers (non-glass fibers) such as Kevlar®, carbon or graphite fibers, silicon carbide (SiC) fibers and other non-glass fibers. It may even be desirable for polymeric fibers (preformed or continuously formed) to be used in the making the strand. For example, these polymeric fibers could be reinforcing fibers, if they were capable of surviving the composite product forming operation. It is desirable for the strand to include glass fibers continuously drawn from a source of molten glass.

The heating device that can be used in the method of the invention can comprise a contact plate which transfers energy in the form of heat to the treatment composition on the fibers. For a composition which contains up to 5% by weight water, the treatment composition on the fibers is dried but the resin is not fully cured. The heating device drives off the water from the treatment composition and, depending on the thermoset resin and the other treatment composition constituents used, may effect no curing or partial curing of the resin. The thermoset resin on the fibers may then be fully cured in a subsequent forming operation, such as a filament winding process (e.g., the filament winding of pipe), a molding process or a pultrusion process (e.g., to form ladder rails). The fiber strands may also be used in a variety of other off-line processes. For example, the fiber strands may be woven or knitted into a composite fabric for use in forming composite articles having reinforcing fibers disposed in a matrix of a polymeric material.

A desirable treatment composition for use in the method of the invention comprises a heat curable epoxy resin, a silane coupling agent and a curing agent. Exemplary heat curable epoxy resins include EPON 862 epoxy bisphenol F liquid (non-aqueous), which is commercially available from Shell Chemical Company. An exemplary curing agent is dicyandiamide, available from American Cyanamide. This curing agent is desirable because it requires exposure to a high temperature environment for a sufficient amount of time, such as 15 minutes, before a substantial amount of curing occurs, thus allowing only partial, if any, curing of the epoxy resin during passage of the fibers over the heating device or prior to the subsequent off-line curing operation. Another suitable curing agent is a polyamide available from Shell Chemical Company under the designation EPI-CURE 8535-Y-50.

In addition to a curing agent, the treatment composition may include an accelerant such as, for example, EMI-24 imidazole (2-ethyl-4-methyl imidazole), commercially available from Air Products. It is desirable for the accelerant to be 2-methyl imidazole available from Aldrich Chemical Co. Once the thermoset resin begins to cure, the accelerant increases the rate of curing. By adjusting the amount and type of accelerant used, if any, the flow (i.e., viscosity) and the tack (i.e. the extent of curing) of the applied treatment composition can be optimized. For example, in a continuous fiber strand forming operation where the strand is coated with a heat curable thermoset resin and heat is applied to effect some degree of curing, an accelerant would enable a certain degree of desired curing to be obtained, even at the high throughput rates typical of continuous strand forming operations. In addition, it may be desirable for an accelerant to be included when faster cure rates are desired during the composite product forming step, in order to increase the throughput of that operation.

By varying the amount of the accelerant and the type of curing agent used, the curing profile (i.e., the rate and degree of curing) of the treatment composition may be adjusted for different processes and applications. The curing profile may also be adjusted by varying the ratio of the accelerant and the curing agent. To optimize the shelflife of the resulting fiber strand 16, for example, the amount of the accelerant may be decreased while keeping the amount of the curing agent the same. This allows for the control of the rate of the crosslinking reaction.

It is desirable for the thermosetting resin and curing agent to be applied in a stoichiometric ratio. It may also be desirable for this ratio to vary depending on the desired end use for the fiber strand. For example, in embodiments where glass fibers are used and additional matrix resin is to be added off-line, a lower level of thermoset resin may be applied such that a stoichiometric ratio is achieved when the additional matrix material is added.

The treatment composition can be selected so as to tailor the interface between the glass fiber surface and the matrix resin, for example, to obtain better wetting of the coated glass fibers by the matrix resin. That is, the treatment composition can be chosen so as to provide better coverage and bonding of the matrix material to the glass fibers forming the strand.

While the ratios of the treatment composition constituents may be varied, it can be desirable for the ratio of constituents to be as follows: about 100 parts curable thermoset resin, about 2 parts curing agent, and about 0.5 parts accelerant. Varying the ratios of the ingredients and/or the type of constituents used can vary the curing temperature. For example, when an EPON® epoxy resin (available from Shell Chemical Company) is combined with 4 phr of the curing agent dicyandiamide without an accelerant, the curing temperature will range from 150°C to 175°C, depending on the exact type of resin used. On the other hand, if 2-10 phr of the accelerant 2-ethyl-4-methyl imidazole is used with an EPON® resin and no curing agent, the curing temperature will range from 60°C to 150°C, depending on the percentage of accelerant and the specific thermoset resin used.

It is desirable for the coated fibers to be coated with about 8% to 35% by weight of a curable thermoset resin and other treatment composition constituents; and it is more desirable for the coated fibers to be loaded with about 30% by weight or more of a curable thermoset resin and other treatment composition constituents. A conventional loss on ignition (LOI) method can be used to determine the amount of resin and other organic chemical treatment constituents loaded onto the fibers.

Other heat curable thermoset resins may also be used in the present invention, including polyurethanes and polyimides, which may be used in non-aqueous form. It should be appreciated that when these or other heat curable thermoset resins are used, a heating device may be used to effect partial curing of the applied thermoset resin.

The treatment composition will also include a silane coupling agent and may includes also a small amount of citric acid which functions to disperse the silane. It is desirable for the silane coupling agent to be used in an amount of up to about 10%. Also, butoxy ethyl stearate (BES) may be included in the treatment composition. BES is a fatty acid ester used as a lubricant. It is desirable to use the BES in percentages from 0 to about 5%.

The treatment composition in the coated fiber strands contain organic compounds. It is desirable for the total organic compounds in each strand to be present in amounts from 0.5 to 35%. It is desirable for thermoset resin compounds to be present in amounts from 0.5% to 35%. It is desirable for the curing agent to be present in amounts from 0 to 10% and for an accelerator to be present in amounts from 0 to 10%.

The invention is described below in greater detail by way of example only with reference to the accompanying drawings, in which:
Fig. 1 is a perspective view of an apparatus for coating a strand of fibers in accordance with the invention; and
Fig. 2 is a perspective view of an alternative apparatus for coating a strand of fibers.

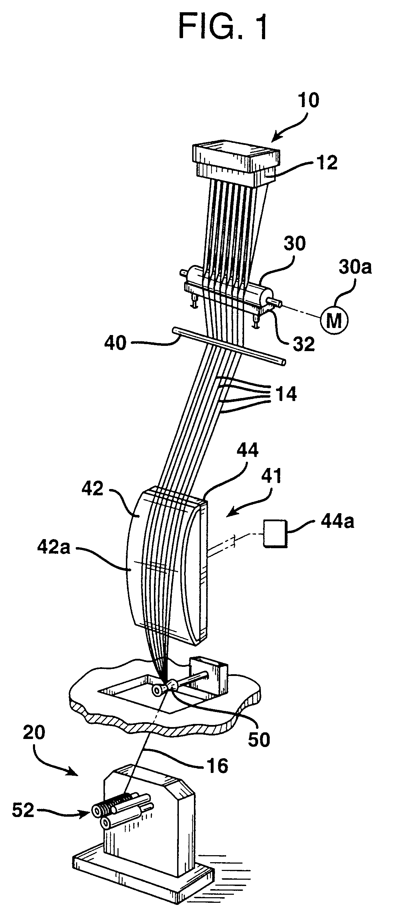

Referring to the drawings, Fig. 1 illustrates an apparatus 10 for coating glass fibers in accordance with the invention. This apparatus 10 includes a heated bushing 12 having a number of orifices (not shown) through which a plurality of streams of molten glass are discharged. The streams of glass are mechanically drawn to form continuous fibers 14 via a drawing device illustrated as a rotatable member or winder device 20. The fibers 14 pass over an applicator roller 30 which applies the non-aqueous treatment composition containing the curable thermoset resin and the silane coupling agent to the fibers 14. A trough 32 containing the treatment composition is positioned below the roller 30. The roller 30 extends into the trough 32 and, as it is rotated by a conventional drive device 30a, transfers an amount of the treatment composition from the trough 32 to the fibers 14. Other devices or techniques for applying a treatment composition to the glass fibers 14 may be used in place of the applicator roller 30.

In the illustrated embodiment, the coated fibers 14 pass over and contact a heating device 41 which is substantially similar to the heating device set forth in US. Patent No. 5,779,758. It is desirable for an engagement roller or bar 40 to be provided between the applicator roller 30 and the heating device 41 to ensure that the fibers 14 make good contact with both the applicator roller and the heating device 41.

The heating device 41 comprises a first plate 42 (also referred to herein as a contact plate) having a curved outer surface 42a which, in the illustrated embodiment, makes direct contact with the coated fibers 14. A resistance-heated second plate 44, which is connected to a power supply 44a, is spaced a small distance from the first plate 42 and serves to radiantly heat the first plate 42. As the fibers 14 pass over the first plate 42, energy in the form of heat is transferred from the first plate 42 to the coated fibers 14. When the treatment composition contains minor amounts of water the heat transferred from the first plate 42 to the fibers 14 evaporates water from the treatment composition. Depending on the type of thermoset resin and/or curing system used, the heating device may effect little, if any, curing of the resin on the fibers 14 or partial curing may take place. When a completely non-aqueous treatment composition is used, the heat transferred from the first plate 42 to the fibers may effect some thickening of the treatment composition due to partial curing of the chemical treatment.

When fibers treated with a non-aqueous treatment composition contact the plate, the heat functions to chemically thicken the treatment composition and initiate partial crosslinking. The temperature of the hot plate 42 should not exceed 290 to 510°C (about 550 to about 950°F).

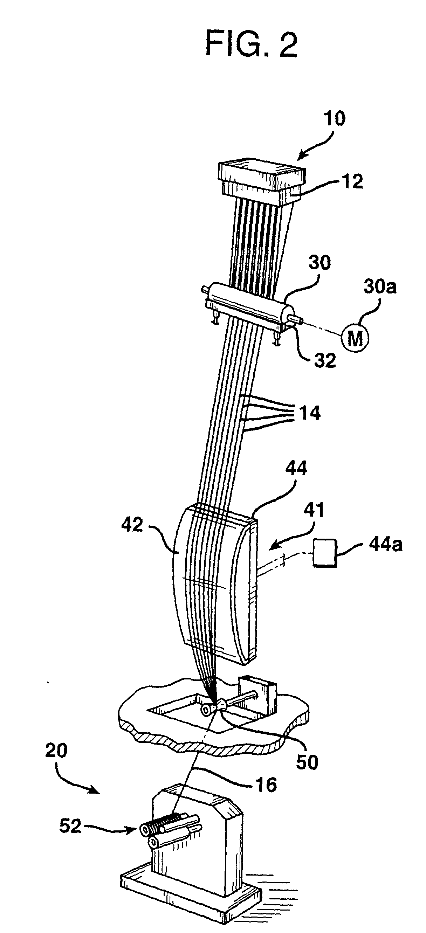

In an alternative embodiment illustrated in Fig. 2, the applicator roller 30 applies the treatment composition to the reverse side of the fibers. In this embodiment, the engagement bar between the applicator roller and the heating device is eliminated, and the fibers are passed in close proximity to the contact plate 42 of the heating device without actually contacting the plate 42 such that they are radiantly heated. It is contemplated that fibers coated with a non-aqueous treatment composition may be radiantly heated. It is more likely that fibers coated with a non-aqueous treatment composition will be dried via radiant heat.

If desired, a stainless steel cover or casing (not shown) may enclose substantially the entirety of the hot plate of the heating device. The heating device and casing define a high temperature environment through which the fibers pass such that the fibers are radiantly and convectively heated as they pass in close proximity to the heating device. It should be appreciated that other variations of the heating device may be used and that any type of suitable heating device may be used.

After passing the first plate 42, the fibers 14 are gathered via a gathering shoe 50 to form a single tow or strand 16. From the gathering shoe 50, the tow 16 is wound via the winder device 20 to form a glass fiber package 52. The wound coated strand 16 of fibers 14 may later be unwound from the package 52, then filament wound into a desired composite article and cured. It is desirable to cure the treatment composition in the coated strand of fibers at a temperature of from 65 to 175°C (150 to 350°F) depending on the type of curing system used.

In a pultrusion process, the strand of coated fibers is unwound from the package 52, pulled through a heated die (not shown) and cured.

It is also contemplated that the strand of coated fibers may be chopped into discrete lengths instead of wound and used in a subsequent molding process.

The coated strand of fibers produced by the method of the present invention may also be formed into a composite fabric, for example by knitting, using the apparatus set out in U.S. Patent NO. 5,891,284. In such a process, it is desirable for the treatment composition applied to the fiber strands to be cured after the fabric is formed during a post-heating process. The treated filbers in fabric form is useful as a preform which can be used in resin transfer molding (RTM) process.

The following Example illustrates the invention.

### Example

A substantially non-aqueous treatment composition was prepared which included 4500g of EPON 862 bisphenol F epoxy available from Shell Chemical Co., 1500g of butyl glycidyl ether reactive diluent, 90g of EMI-24 2-ethyl-4-methyl imidazole, and 100g of an epoxy silane coupling agent (A-187 available from OSI Specialties Group of Witco Chemical), and from about 100g to about 300g of water which acted as a polar agent and viscosity modifier. The treatment composition was applied to a plurality of glass fibers with an applicator roller at a rate of 120 g/min. The coated fibers were then heated with a heating device to achieve a content of organic treatment composition constituents of about 25% by weight. Curing of the coated thermoset resin was effected when the strand of coated fibers was subsequently filament wound or tape wound around a mandrel and heated at 120 to 150°C (250-300°F) for approximately one half hour.

## Claims

1. A method for forming a fiber strand suitable for making a composite article, the method comprising:
coating a plurality of reinforcing fibers with a non-aqueous or substantially non-aqueous treatment composition which may contain not more than about 4.6% by weight water and comprising a curable thermosetting resin and a silane coupling agent; and
heating the coated fibers thereby to partially cure the thermosetting resin.

2. A method according to claim 1, wherein the treatment composition further comprises a curing agent for the resin.

3. A method according to claim 1 or claim 2, wherein the treatment composition further comprises an accelerant.

4. A method according to claim 2, wherein the ratio of the curable resin to the curing agent is about 50:1.

5. A method according to claim 3, wherein the ratio of the curable resin to the accelerant is about 200:1.

6. A method according to claim 2 and claim 3, wherein the treatment composition contains about 2 parts curing agent, about 0.5 part accelerant, and about 100 parts curable resin.

7. A method according to any one of claims 1 to 6, wherein the treatment composition further comprises butoxy ethyl stearate.

8. A method according to any one of claims 1 to 7, wherein the fibers are loaded with from 8 to 35% by weight of the curable resin.

9. A method for forming a package of wound fiber strands which comprises forming fiber strands by a method according to any one of claims 1 to 8, and forming the strands into a wound package.

## Patentansprüche

1. Verfahren zum Erzeugen eines zur Herstellung eines zusammengesetzten Gegenstands geeigneten Faserstrangs, wobei
mehrere Verstärkungsfasern mit einer nicht-wässrigen oder im wesentlichen nicht-wässrigen Behandlungszusammensetzung beschichtet werden, die nicht mehr als etwa 4,6 Gew-% Wasser enthalten kann und ein härtbares, wärmehärtendes Harz sowie ein Silan-Bindemittel enthält, und
die beschichteten Fasern erwärmt werden, um das wärmehärtende Harz teilweise zu härten.

2. Verfahren nach Anspruch 1, wobei die Behandlungszusammensetzung ein Härter für das Harz enthält.

3. Verfahren nach Anspruch 1 oder 2, wobei die Behandlungszusammensetzung einen Beschleuniger enthält.

4. Verfahren nach Anspruch 2, wobei das Verhältnis von härtbarem Harz zu Härter etwa 50:1 beträgt.

5. Verfahren nach Anspruch 3, wobei das Verhältnis von härtbarem Harz zu Beschleuniger etwa 200:1 beträgt.

6. Verfahren nach Anspruch 2 oder 3, wobei die Behandlungszusammensetzung etwa 2 Teile Härter, etwa 0,5 Teile Beschleuniger und etwa 100 Teile härtbares Harz enthält.

7. Verfahren nach einem der Ansprüche 1 bis 6, wobei die Behandlungszusammensetzung ferner Butoxyethylstearat enthält.

8. Verfahren nach einem der Ansprüche 1 bis 7, wobei die Fasern mit 8 bis 35 Gew-% des härtbaren Harzes versehen werden.

9. Verfahren zum Erzeugen eines Pakets aus gewickelten Fasersträngen, wobei Faserstränge nach einem Verfahren gemäß einem der Ansprüche 1 bis 8 erzeugt und zu einem gewickelten Paket geformt werden.

## Revendications

1. Procédé de production d'un toron de fibres adapté pour réaliser un article composite, procédé comprenant :
le revêtement d'une pluralité de fibres de renforcement avec une composition de traitement non aqueuse ou sensiblement non aqueuse qui peut contenir pas plus d'environ 4,6 % en poids d'eau et comprenant une résine thermodurcissable durcissable et un agent de couplage en silane ; et
le chauffage des fibres revêtues afin d'ainsi durcir partiellement la résine thermodurcissable.

2. Procédé selon la revendication 1, dans lequel la composition de traitement comprend en outre un agent de durcissement pour la résine.

3. Procédé selon la revendication 1 ou la revendication 2, dans lequel la composition de traitement comprend en outre un accélérateur.

4. Procédé selon la revendication 2, dans lequel le rapport résine durcissable:agent de durcissement est d'environ 50:1.

5. Procédé selon la revendication 3, dans lequel le rapport résine durcissable:accélérateur est d'environ 200:1.

6. Procédé selon la revendication 2 et la revendication 3, dans lequel la composition de traitement contient environ 2 parties d'agent de durcissement, environ 0,5 partie d'accélérateur, et environ 100 parties de résine durcissable.

7. Procédé selon l'une quelconque des revendications 1 à 6, dans lequel la composition de traitement comprend en outre du stéarate butoxyéthylique.

8. Procédé selon l'une quelconque des revendications 1 à 7, dans lequel les fibres sont chargées avec 8 à 35 % en poids de la résine durcissable.

9. Procédé de production d'un paquet de torons de fibres enroulés qui comprend la production de torons de fibres à l'aide d'un procédé selon l'une quelconque des revendications 1 à 8, et la production des torons en un paquet enroulé.
